# EUROPÄISCHE PATENTANMELDUNG

(11) **EP 3 875 293 A1**
(43) Veröffentlichungstag der Anmeldung: **08.09.2021**
(21) Anmeldenummer: 21153897.0
(22) Anmeldetag: 28.01.2021
(51) Int. Cl.: B60H 1/00

(54) **ANTRIEBSACHSENEINRICHTUNG FÜR EIN ELEKTRISCH ANGETRIEBENES FAHRZEUG UND ELEKTRISCH ANGETRIEBENES FAHRZEUG**

(30) Priorität: 04.03.2020 DE 102020202747
(71) Anmelder: Robert Bosch GmbH, 70442 Stuttgart (DE)
(72) Erfinder: Hejberger, David, 71686 Remseck Am Neckar (DE)

(57) **Zusammenfassung**

Die vorliegende Erfindung schafft eine Antriebsachseneinrichtung (10) für ein elektrisch angetriebenes Fahrzeug (F) umfassend ein Gehäuse (G); eine elektrische Maschine (EM), welche in das Gehäuse (G) integriert ist; zumindest eine Kältekreislaufkomponente (K1) zum Kühlen der elektrischen Maschine (EM), welche zumindest teilweise in das Gehäuse (G) integriert ist; eine Leistungselektronik (LE), welche in das Gehäuse (G) integriert ist und dazu eingerichtet ist, die elektrische Maschine (EM) und/oder die zumindest eine Kältekreislaufkomponente (K1) zu steuern.

## Beschreibung

Die vorliegende Erfindung betrifft eine Antriebsachseneinrichtung für ein elektrisch angetriebenes Fahrzeug und ein elektrisch angetriebenes Fahrzeug.

### Stand der Technik

Die Anwendung von Kältemittel in Fahrzeugen dient meist dazu, eine Übertragung von Wärme oder Kälte zwischen dem Motorraum und dem Fahrzeuginnenraum zu ermöglichen. Hierbei wird üblicherweise ein Kältemittelkreislauf genutzt, welcher sich sowohl im Motorraum als auch teilweise im Fahrzeuginnenraum erstrecken kann. Im Fahrzeuginnenraum erstreckt sich der Kältemittelkreislauf meist bis in die Klimaanlage hinein, da dort der Verdampfer für den Austausch von Wärme mit der Innenraumluft angeordnet sein kann. Der gesamte Kältemittelkreislauf kann dadurch verhältnismäßig groß ausfallen und eine entsprechend große Menge an Kältemittel benötigen. Da sich der Kältemittelkreislauf teilweise auch bis in den Fahrzeuginnenraum erstreckt, muss üblicherweise für diesen Abschnitt eine besonders hohe Anforderung an die Dichtheit des Kältemittelkreislaufs bestehen und der Kältemittelkreislauf insgesamt einer strengen Umweltbestimmung unterliegen.

In der DE 10 2010 055 439 A1 wird ein Fahrzeug mit einer im Vorderwagen angeordneten Klimatisierungsvorrichtung beschrieben. Ein Antriebsmodul und die Klimavorrichtung sind in einem Motorraum angeordnet.

### Offenbarung der Erfindung

Die vorliegende Erfindung schafft eine Antriebsachseneinrichtung für ein elektrisch angetriebenes Fahrzeug nach Anspruch 1 und ein elektrisch angetriebenes Fahrzeug nach Anspruch 7.

Bevorzugte Weiterbildungen sind Gegenstand der Unteransprüche.

### Vorteile der Erfindung

Die der vorliegenden Erfindung zugrunde liegende Idee besteht darin, eine Antriebsachseneinrichtung für ein elektrisch angetriebenes Fahrzeug sowie ein elektrisch angetriebenes Fahrzeug anzugeben, wobei die Kältemittel führenden Komponenten zur Übertragung von Wärme oder Kälte auf die Antriebsachseneinrichtung oder zumindest auf den Motorraum des Fahrzeugs beschränkt werden können. Auf diese Weise kann die notwendige Menge an Kältemittel verringert werden, und der auf den Motorraum und/oder auf die Antriebsachseneinrichtung beschränkte Kältemittelkreislauf weniger strengen Dichtheitsbestimmungen unterliegen als Kältemittelkreisläufe, welche sich auch in den Fahrzeuginnenraum erstrecken.

Erfindungsgemäß umfasst die Antriebsachseneinrichtung für ein elektrisch angetriebenes Fahrzeug ein Gehäuse; eine elektrische Maschine, welche in das Gehäuse integriert ist; zumindest eine Kältekreislaufkomponente zum Kühlen der elektrischen Maschine, welche zumindest teilweise in das Gehäuse integriert ist; eine Leistungselektronik, welche in das Gehäuse integriert ist und dazu eingerichtet ist, die elektrische Maschine und/oder die zumindest eine Kältekreislaufkomponente zu steuern.

Das Gehäuse kann als Antriebsachseneinrichtung für einen Traktionsantrieb des Fahrzeugs eine sogenannte elektrische Achse (eA) darstellen, welche in Form einer Achse im Fahrzeug verbaut sein kann und zumindest eines der Antriebsräder des Fahrzeugs antreiben kann. Das Gehäuse kann also vorteilhaft das Systemgehäuse des elektrischen Antriebs darstellen.

Die Leistungselektronik kann vorteilhaft einen Inverter zum Ansteuern der elektrischen Maschine umfassen.

Die Bezeichnung der Kältekreislaufkomponente kann einen Oberbegriff darstellen und eine oder mehrere Komponenten eines Kreislaufs mit einem Kältemittel zum Austausch von Wärme oder Kälte zwischen der elektrischen Maschine und/oder der Leistungselektronik und/oder des Fahrzeuginnenraums umfassen. Auf diese Weise kann vorteilhaft der Kältemittelkreislauf des Fahrzeugs in die elektrische Achse zumindest teilweise integriert werden (etwa als sogenannte Hochintegration). Gegenüber bekannten Kältekreisläufen in Fahrzeugen, insbesondere in elektrisch angetriebenen Fahrzeugen, kann dadurch vorteilhaft Gewicht sowie Zeit zur Herstellung und Inbetriebnahme sowie Kosten zur Herstellung gespart werden. Des Weiteren kann der Kältekreislauf, insbesondere die Kältekreislaufkomponente, im ganzen Fahrzeug gegenüber einer üblichen Ausgestaltung signifikant verkleinert werden, wenn ein Wärmeüberträger, welcher eine der möglichen Komponenten der Kältekreislaufkomponente sein kann, zusätzlich an oder in der elektrischen Achse angebracht oder integriert wird. Eine derartige Ausgestaltung kann zu einer deutlichen Reduktion des notwendigen Kältemittels führen, da das Kältemittel selbst vorteilhaft nur in der Antriebsachseneinrichtung benötigt wird, und bei den Komponenten im Fahrzeuginnenraum darauf verzichtet werden kann. Durch die Reduzierung der nötigen Menge des Kältemittels kann ein positiver Einfluss auf die Umwelt erzielt werden, da insgesamt weniger Kältemittel benötigt werden kann.

Gemäß einer bevorzugten Ausführungsform der Antriebsachseneinrichtung umfasst die Kältekreislaufkomponente einen Kältemittelverdichter; ein elektrisches Expansionsventil und/oder ein Wasserventil; und einen Wärmeüberträger.

Gemäß einer bevorzugten Ausführungsform der Antriebsachseneinrichtung umfasst der Wärmeüberträger einen Kältemittellauf und einen Wasserkreislauf, welche zu einer gegenseitigen Wärmeübertragung eingerichtet sind.

Der Kältemittellauf kann ein Kreislauf oder ein Teilabschnitt eines Kreislaufs sein und wird daher übergreifend als Kältemittellauf bezeichnet. Der Kältemittellauf und der Wasserkreislauf sind vorteilhaft getrennt voneinander, können jedoch in gegenseitigem Wärmeaustausch miteinander stehen, etwa durch physischen Kontakt der Leitungen, oder durch ein wärmeleitendes Medium zwischen diesen. Das Wasser im Wasserkreislauf kann somit durch das Kältemittel im Kältemittellauf gekühlt oder erwärmt werden. Beim Erwärmen des Wassers kann das dazu notwendige warme Kältemittel im Kältemittellauf verdichtet werden, vorteilhaft durch Verdichtung des Kältemittels durch den Kältemittelverdichter. Dies entspricht vorteilhaft einem Wärmepumpenbetrieb. Eine Steuereinrichtung kann im Wasserkreislauf von kalt auf warm umschalten.
Der Wärmepumpenbetrieb kann dabei jenem Betrieb eines Kühlschranks entsprechend, nur in umgekehrter Weise und so damit geheizt werden. Der Wasserkreislauf einen warmen und einen kalten Kreislauf umfassen. Im Fahrzeuginnenraum kann im Klimagerät ein warmer und ein kalter Wasserwärmetauscher vorhanden sein.

Das Erwärmen kann so nicht nur für den Fahrzeuginnenraum erfolgen, sondern auch für Teilkomponenten oder die gesamte elektrische Achse und/oder eine Fahrzeugbatterie oder für weitere Komponenten im Fahrzeug. Die Notwendigkeit für die Anwendung eines Zusatzheizers im Fahrzeug kann verringert werden, die Zahl der Komponenten für eine Heizung durch den Zusatzheizer beschränkt werden, oder gar die Notwendigkeit für Anwendung eines Zusatzheizers vollständig entfallen. Durch eine derartige Art des Heizens von Fahrzeugkomponenten kann die Effizienz des elektrisch angetriebenen Fahrzeugs deutlich erhöht werden. In weiterer Folge kann sich dafür eine Vergrößerung der Reichweite des elektrisch angetriebenen Fahrzeugs ergeben.

Durch den Kältemittellauf und/oder den Wärmeüberträger kann auch die elektrische Achse (Antriebsachseneinrichtung) selbst gekühlt werden.

Gemäß einer bevorzugten Ausführungsform der Antriebsachseneinrichtung umfasst der Kältemittellauf ein Propan-Kältemittel. Propan ist ein natürliches Kältemittel. Propan hat hervorragende thermodynamische Eigenschaften und ist ein besonders energiesparendes Kältemittel.

Gemäß einer bevorzugten Ausführungsform der Antriebsachseneinrichtung ist der Wärmeüberträger dazu eingerichtet, mit dem Kältemittellauf in einem Wärmepumpenbetrieb betrieben zu werden.

Gemäß einer bevorzugten Ausführungsform der Antriebsachseneinrichtung umfasst diese ein Getriebe und eine Steuereinrichtung für die elektrische Maschine und für die Kältekreislaufkomponente, welche in das Gehäuse integriert sind.

Durch die Integration des Getriebes und der Steuereinrichtung, etwa der Leistungselektronik, kann der Grad der Integration in die Antriebsachseneinrichtung und damit vorteilhaft in die elektrische Achse, vorteilhaft weiter erhöht werden und diese noch kompakter gestaltet werden.

Erfindungsgemäß umfasst das elektrisch angetriebene Fahrzeug eine erfindungsgemäße Antriebsachseneinrichtung für ein elektrisch angetriebenes Fahrzeug, einen Wasserkreislauf, welcher mit der Kältekreislaufkomponente für einen Wärmeaustausch mit dieser verbunden ist und zumindest teilweise außerhalb der Antriebsachseneinrichtung angeordnet ist; und ein Klimagerät, welches außerhalb der Antriebsachseneinrichtung und in einem Fahrzeuginnenraum angeordnet ist, wobei der Wasserkreislauf zwischen dem Fahrzeuginnenraum und der Kältekreislaufkomponente angeordnet ist und dazu eingerichtet ist, einen Wärmeaustausch zwischen dem Fahrzeuginnenraum und der Antriebsachseneinrichtung zu erzeugen.

Der Wasserkreislauf kann sich so vom Fahrzeuginnenraum in den Motorraum und dort bis zum Wärmeüberträger und wieder zurück in den Fahrzeuginnenraum erstrecken. Der Wasserkreislauf aus dem Fahrzeuginnenraum bis in den Motorraum kann so vorteilhaft zum Wärmeaustausch mit dem Kältemittellauf eingerichtet sein und mit dem Wasserkreislauf des Wärmeüberträgers verbunden sein oder diesem im Bereich des Wärmeüberträgers entsprechen.

Der Wortlaut "verbunden" kann dabei einen physischen Kontakt und/oder einen wärmeübertragenden Kontakt umfassen. Das Wasser und das Kältemittel kommen dabei nicht in Kontakt miteinander. Die Antriebsachseneinrichtung kann ausschließlich außerhalb des Fahrzeuginnenraums angeordnet sein, etwa im Motorraum, und der Wasserkreislauf kann sich zumindest teilweise vom Motorraum in den Fahrzeuginnenraum erstrecken.

Gemäß einer bevorzugten Ausführungsform des elektrisch angetriebenen Fahrzeugs umfasst dieses einen Kondensator und einen Trockner, welche in einem Motorraum des elektrischen Fahrzeugs angeordnet sind und mit der Kältekreislaufkomponente verbunden sind.

Der Kondensator kann einen Frontlüfter im Fahrzeug umfassen oder an diesem angeordnet sein. Der Kondensator und der Trockner können an den bekannten Stellen im Motorraum verbaut sein. Der Frontlüfter kann dabei im Zusammenspiel mit dem Kondensator als ein Verflüssiger des Kältemittels dienen.

Gemäß einer bevorzugten Ausführungsform des elektrisch angetriebenen Fahrzeugs ist mittels der Antriebsachseneinrichtung ein Fahrzeuginnenraum und/oder zumindest eine Fahrzeugkomponente kühlbar oder heizbar.

Gemäß einer bevorzugten Ausführungsform des elektrisch angetriebenen Fahrzeugs umfasst das Klimagerät einen ersten Wasserwärmetauscher und einen zweiten Wasserwärmetauscher, wobei der erste Wasserwärmetauscher dazu eingerichtet ist, Wärme mit dem Wasserkreislauf auszutauschen und der zweite Wasserwärmetauscher dazu eingerichtet ist, Wärme mit einer Luft im Fahrzeuginnenraum auszutauschen.

Der erste und der zweite Wasserwärmetauscher können einen in Klimageräten üblicherweise verbauten Verdampfer ersetzen. Der erste Wasserwärmetauscher kann dabei zum Kühlen und/oder Entfeuchten im Fahrzeuginnenraum genutzt werden und der zweite Wasserwärmetauscher kann zum Heizen im Fahrzeuginnenraum genutzt werden. Durch die beiden Wasserwärmetauscher kann auf eine Anwendung eines Kältemittels im Fahrzeuginnenraum vorteilhaft verzichtet werden, da dort auch auf einen üblichen Verdampfer im Klimagerät verzichtet werden kann. Der erste Wasserwärmetauscher kann mit dem Wasserkreislauf in einem wärmeübertragenden Kontakt stehen oder dem Wasserkreislauf entsprechen.

Das elektrisch angetriebene Fahrzeug kann sich auch durch die in Verbindung mit der Antriebsachseneinrichtung genannten Merkmale und deren Vorteile auszeichnen und umgekehrt.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand des in den schematischen Figuren der Zeichnung angegebenen Ausführungsbeispiels näher erläutert.

Es zeigen:
- Fig. 1: eine schematische Ansicht eines elektrisch angetriebenen Fahrzeugs gemäß einem Ausführungsbeispiel der vorliegenden Erfindung;
- Fig. 2: eine schematische Ansicht einer Antriebsachseneinrichtung in einem elektrisch angetriebenen Fahrzeug gemäß einem Ausführungsbeispiel der vorliegenden Erfindung; und
- Fig. 3: eine schematische Ansicht eines bekannten Kältekreislaufs in einem Fahrzeug.

In den Figuren bezeichnen gleiche Bezugszeichen gleiche bzw. funktionsgleiche Elemente.

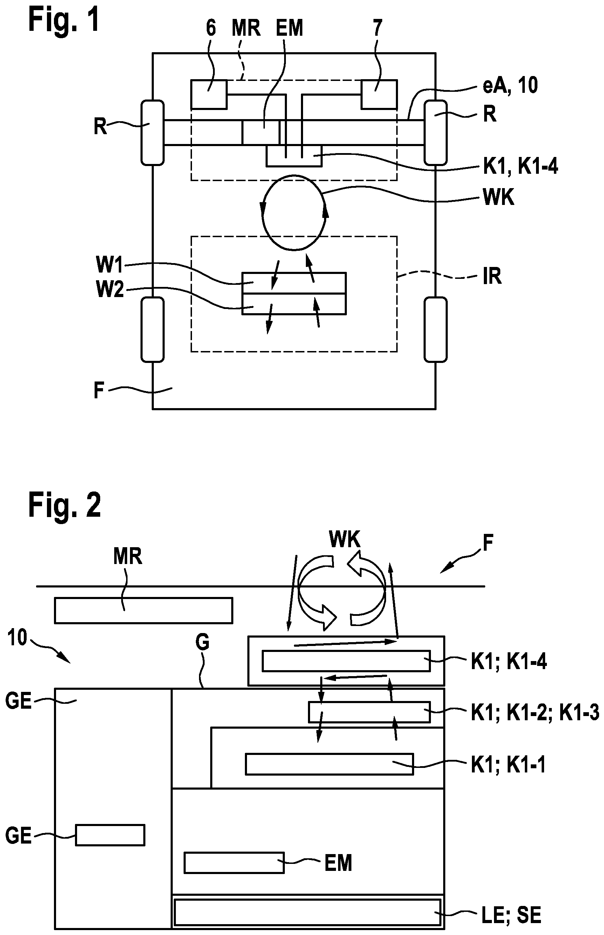

Fig. 1 zeigt eine schematische Ansicht eines elektrisch angetriebenen Fahrzeugs gemäß einem Ausführungsbeispiel der vorliegenden Erfindung.

Das elektrisch angetriebene Fahrzeug F umfasst eine erfindungsgemäße Antriebsachseneinrichtung 10, welche vorteilhaft eine elektrische Achse eA darstellt, die zwischen zwei Antriebsrädern R angeordnet ist. Des Weiteren umfasst das elektrisch angetriebene Fahrzeug F einen Wasserkreislauf WK, welcher mit der Kältekreislaufkomponente K1 der Antriebsachseneinrichtung 10 für einen Wärmeaustausch mit dieser verbunden ist und zumindest teilweise außerhalb der Antriebsachseneinrichtung 10 angeordnet ist, um dort einen Wärmeaustausch mit dem Fahrzeuginnenraum IR zu ermöglichen. Die Antriebsachseneinrichtung 10 ist vorteilhaft in einem Bereich des Motorraums MR des elektrisch angetriebenen Fahrzeugs F angeordnet. Des Weiteren umfasst das elektrisch angetriebene Fahrzeug F ein Klimagerät 8, welches außerhalb der Antriebsachseneinrichtung 10 und in dem Fahrzeuginnenraum IR angeordnet ist, wobei der Wasserkreislauf WK zwischen dem Fahrzeuginnenraum und der Kältekreislaufkomponente K1 angeordnet ist und dazu eingerichtet ist, einen Wärmeaustausch zwischen dem Fahrzeuginnenraum IR und der Antriebsachseneinrichtung 10 zu erzeugen.

Im Motorraum MR sind weiterhin ein Kondensator 6 und einen Trockner 7 umfasst und sind mit der Kältekreislaufkomponente K1 verbunden, insbesondere durch einen Kältemittelkreislauf zwischen diesen. Hierbei sind mittels der Antriebsachseneinrichtung 10 der Fahrzeuginnenraum IR und/oder zumindest eine Fahrzeugkomponente, etwa eine Batterie, kühlbar oder heizbar.

Das Klimagerät 8 kann vorteilhaft einen ersten Wasserwärmetauscher W1 und einen zweiten Wasserwärmetauscher W2 umfassen, wobei der erste Wasserwärmetauscher W1 dazu eingerichtet ist, Wärme mit dem Wasserkreislauf WK auszutauschen und der zweite Wasserwärmetauscher W2 dazu eingerichtet ist, Wärme mit einer Luft im Fahrzeuginnenraum IR auszutauschen. Zum Kühlen des Innenraums IR kann etwa der zweite Wasserwärmetauscher W2 die Wärme aus der Innenraumluft ziehen und in einem wärmeleitenden Kontakt, etwa direkt physisch anliegend oder durch ein wärmeleitendes Medium, mit dem ersten Wasserwärmetauscher W1 sein und dieser eine kühlere (geringere) Temperatur von dem Wasserkreislauf WK beziehen. Das Heizen des Innenraums kann umgekehrt verlaufen.

Die beiden Wasserwärmetauscher W1 und W2 können im Klimagerät vorteilhaft den üblichen Verdampfer ersetzen und somit kann vorteilhaft auf den Einsatz von Kältemittel im Fahrzeuginnenraum IR verzichtet werden. Dadurch können sich vorteilhaft abgemilderte Dichtigkeitsbestimmungen für den Kältekreislauf im Motorraum MR ergeben, auf welchen der Einsatz des Kältemittels beschränkt werden kann. Die zumindest teilweise Integration des Kältemittelkreises in die elektrische Achse ermöglichen eine Abmilderung der anzuwendenden Dichtigkeitsbestimmungen für die Kältemittelleitungen sowie eine mögliche Verkleinerung des Kältemittelkreises (Beschränkung auf den Motorraum). Die benötigte Menge an Kältemittel kann so vorteilhaft reduziert werden. Durchschnittliche Füllmengen (r1234yf) können in einem Fahrzeug bei etwa 450 g liegen. Ein zumindest teilweise in die elektrische Achse integrierter Kältemittelkreis kann auch nur ein Drittel dieser Menge des Kältemittels umfassen. Hierbei können auch aufwendige und gasdichte Metallleitungen, etwa aus Aluminium, entfallen, was sich in einer Reduzierung von Gewicht und Kosten auswirken kann.

Der Wasserkreislauf WK steht vorteilhaft mit dem Wärmeüberträger K1-4 der Kältekreislaufkomponente K1 in einem wärmeübertragbaren Kontakt, etwa in direktem physischen Kontakt oder über ein wärmeleitbares Medium.

Fig. 2 zeigt eine schematische Ansicht einer Antriebsachseneinrichtung in einem elektrisch angetriebenen Fahrzeug gemäß einem Ausführungsbeispiel der vorliegenden Erfindung.

Die Antriebsachseneinrichtung 10 für ein elektrisch angetriebenes Fahrzeug F umfasst ein Gehäuse G; eine elektrische Maschine EM, welche in das Gehäuse G integriert ist; zumindest eine Kältekreislaufkomponente K1 zum Kühlen der elektrischen Maschine EM, welche zumindest teilweise in das Gehäuse G integriert ist; eine Leistungselektronik LE, welche in das Gehäuse G integriert ist und dazu eingerichtet ist, die elektrische Maschine EM und/oder die zumindest eine Kältekreislaufkomponente K1 zu steuern.

Des Weiteren umfasst dabei die Kältekreislaufkomponente K1 einen Kältemittelverdichter K1-1; ein elektrisches Expansionsventil K1-2; ein Wasserventil K1-3; und einen Wärmeüberträger K1-4. Das elektrische Expansionsventil K1-2 kann dem Wärmeüberträger K1-4 verbunden sein, beide können Kältemittel führen. Das Expansionsventil sitzt in der Regel in der Stirnwand des Kfz und ist in den Kältekreislauf integriert. Es dient dazu die Expansion (Einspritzung in den Verdampfer zu steuern). Das Expansionsventil lässt das flüssige verdichtet Kältemittel in den Verdampfer expandieren, dadurch kühlt es runter und entzieht über den Verdampfer der Umgebung im Fahrzeug die Wärme. Das Expansionsventil kann über den Saugdruck am Verdichter gesteuert werden. Das Expansionsventil kann mechanisch oder elektrisch betrieben werden.

Die Leistungselektronik LE kann Steuerungen SE für die elektrische Maschine EM und/oder für den Kältemittelverdichter K1-1 und/oder für den Kältemittellauf oder für den Kältemittelkreislauf (alle oder mehrere Komponenten, welche an die Leitungen für das Kältemittel angeschlossen sind) umfassen.

Der Wärmeüberträger K1-4 kann einen Kältemittellauf und einen Wasserkreislauf umfassen, welche zu einer gegenseitigen Wärmeübertragung eingerichtet sind.

Die Antriebsachseneinrichtung 10 kann ein Getriebe GE und eine Steuereinrichtung SE für die elektrische Maschine EM und für die Kältekreislaufkomponente K1 umfassen, welche in das Gehäuse G integriert sein können.

In der Fig. 2 markiert das Rechteck mit der Bezeichnung "MR", dass dieser Bereich unterhalb des horizontalen Trennstriches, welchen nur der WK-Kreislauf übertritt, den Motorraum darstellt.

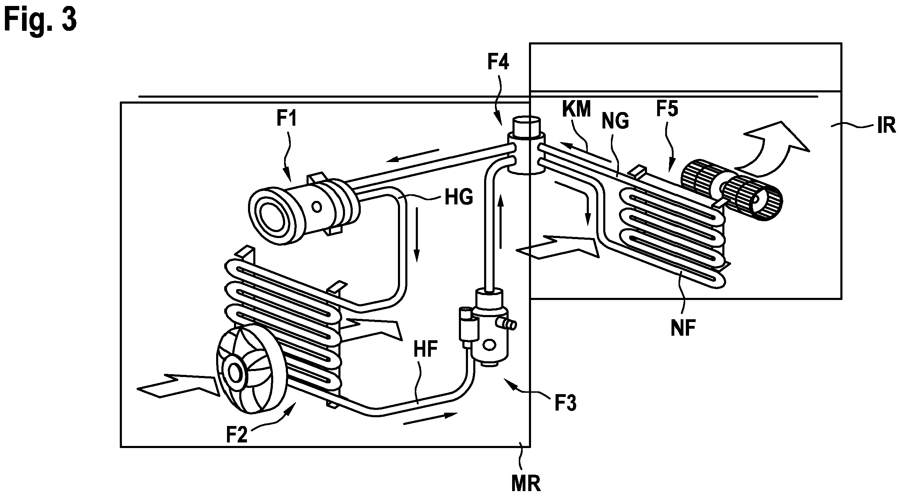

Fig. 3 zeigt eine schematische Ansicht eines bekannten Kältekreislaufs in einem Fahrzeug.

In bekannten Ausführungen (zur Fahrzeugklimatisierung) kann der Kälte(mittel)kreislauf derart ausgestaltet sein, dass das Kältemittel KM sowohl im Motorraum MR als auch im Fahrzeuginnenraum IR vorhanden sein kann. Im Fahrzeuginnenraum IR kann sich der Kältekreislauf dabei bis in das Klimagerät erstrecken.

Im Motorraum MR kann der Kältekreislauf den Kältemittelverdichter F1, den Kondensator F2, den Trockner F3, und das Expansionsventil F4 miteinander verbinden. Im Fahrzeuginnenraum IR kann der Kältekreislauf dann das Expansionsventil F4 mit dem Verdampfer F5 (im Klimagerät) verbinden. Das Kältemittel KM kann dabei verschiedene Zustände durchlaufen, wobei die Flussrichtung mit Pfeilen gezeigt wird. Zwischen dem Kältemittelverdichter F1 (Kompressor mit Rotor) und dem Kondensator F2 (mit Lüfter) kann das Kältemittel unter Hochdruck und gasförmig im Zustand HG sein. Zwischen dem Kondensator F2 und dem Trockner F3 und weiter bis zum Expansionsventil F4 kann das Kältemittel den Zustand HF annehmen, insbesondere unter Hochdruck und flüssig sein. Zwischen dem Expansionsventil F4 und dem Verdampfer F5 kann das Kältemittel den Zustand NF annehmen, insbesondere unter Niederdruck und flüssig sein, und zwischen dem Verdampfer F5 und dem Expansionsventil F4 und weiter bis zum Kältemittelverdichter F1 kann das Kältemittel den Zustand NG annehmen, insbesondere unter Niederdruck und gasförmig sein.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar.

## Patentansprüche

1. Antriebsachseneinrichtung (10) für ein elektrisch angetriebenes Fahrzeug (F) umfassend:
- ein Gehäuse (G);
- eine elektrische Maschine (EM), welche in das Gehäuse (G) integriert ist;
- zumindest eine Kältekreislaufkomponente (K1) zum Kühlen der elektrischen Maschine (EM), welche zumindest teilweise in das Gehäuse (G) integriert ist;
- eine Leistungselektronik (LE), welche in das Gehäuse (G) integriert ist und dazu eingerichtet ist, die elektrische Maschine (EM) und/oder die zumindest eine Kältekreislaufkomponente (K1) zu steuern.

2. Antriebsachseneinrichtung (10) nach Anspruch 1, bei welcher die Kältekreislaufkomponente (K1)
- einen Kältemittelverdichter (K1-1);
- ein elektrisches Expansionsventil (K1-2) und/oder ein Wasserventil (K1-3); und
- einen Wärmeüberträger (K1-4) umfasst.

3. Antriebsachseneinrichtung (10) nach Anspruch 2, bei welcher der Wärmeüberträger (K1-4) einen Kältemittellauf und einen Wasserkreislauf umfasst, welche zu einer gegenseitigen Wärmeübertragung eingerichtet sind.

4. Antriebsachseneinrichtung (10) nach Anspruch 3, bei welcher der Kältemittellauf ein Propan-Kältemittel umfasst.

5. Antriebsachseneinrichtung (10) nach einem der Ansprüche 2 bis 4, bei welcher der Wärmeüberträger (K1-4) dazu eingerichtet ist, mit dem Kältemittellauf in einem Wärmepumpenbetrieb betrieben zu werden.

6. Antriebsachseneinrichtung (10) nach einem der Ansprüche 1 bis 5, welche weiterhin ein Getriebe (GE) und eine Steuereinrichtung (SE) für die elektrische Maschine (EM) und für die Kältekreislaufkomponente (K1) umfasst, welche in das Gehäuse (G) integriert sind.

7. Elektrisch angetriebenes Fahrzeug (F) umfassend:
- eine Antriebsachseneinrichtung (10) nach einem der Ansprüche 1 bis 6;
- einen Wasserkreislauf (WK), welcher mit der Kältekreislaufkomponente (K1) für einen Wärmeaustausch mit dieser verbunden ist und zumindest teilweise außerhalb der Antriebsachseneinrichtung (10) angeordnet ist; und
- ein Klimagerät (8), welches außerhalb der Antriebsachseneinrichtung (10) und in einem Fahrzeuginnenraum (IR) angeordnet ist, wobei der Wasserkreislauf (WK) zwischen dem Fahrzeuginnenraum und der Kältekreislaufkomponente (K1) angeordnet ist und dazu eingerichtet ist, einen Wärmeaustausch zwischen dem Fahrzeuginnenraum (IR) und der Antriebsachseneinrichtung (10) zu erzeugen.

8. Elektrisch angetriebenes Fahrzeug (F) nach Anspruch 7, welches einen Kondensator (6) und einen Trockner (7) umfasst, welche in einem Motorraum (MR) des elektrischen Fahrzeugs (F) angeordnet sind und mit der Kältekreislaufkomponente (K1) verbunden sind.

9. Elektrisch angetriebenes Fahrzeug (F) nach Anspruch 7 oder 8, bei welchem mittels der Antriebsachseneinrichtung (10) ein Fahrzeuginnenraum und/oder zumindest eine Fahrzeugkomponente kühlbar oder heizbar ist.

10. Elektrisch angetriebenes Fahrzeug (F) nach einem der Ansprüche 7 bis 9, bei welchem das Klimagerät (8) einen ersten Wasserwärmetauscher (W1) und einen zweiten Wasserwärmetauscher (W2) umfasst, wobei der erste Wasserwärmetauscher (W1) dazu eingerichtet ist, Wärme mit dem Wasserkreislauf (WK) auszutauschen und der zweite Wasserwärmetauscher (W2) dazu eingerichtet ist, Wärme mit einer Luft im Fahrzeuginnenraum (IR) auszutauschen.
